# EUROPEAN PATENT APPLICATION

(11) **EP 2 317 772 A2**
(43) Date of publication of application: **04.05.2011**
(21) Application number: 10186556.6
(22) Date of filing: 05.10.2010
(51) Int. Cl.: H04N 21/258, H04N 21/2343, H04N 21/845, H04N 21/854, H04N 21/858

(54) **Method and system for providing content adapted to a specific reception device**

(30) Priority: 14.10.2009 KR 20090097911
(71) Applicant: Ein's I&S Co., Ltd., Gangnam-gu, Seoul 135-924 (KR)
(72) Inventor: Lee, Eun Young, Seoul (KR)
(74) Representative: Beck & Rössig European Patent Attorneys

(57) **Abstract**

A method of providing content through a content providing system (300) is provided. The method includes dividing content into objects (S401) and associating the divided objects with corresponding codes (S402); storing the objects associated with the codes in a database; accepting a connection of a specific medium (100) among the plurality of media; receiving a request for specific content from the connected specific medium (100); extracting play environment information (S405) including terminal feature information for the connected specific medium; calling a specific object code corresponding to the connected specific medium from a database (S406) in consideration of the extracted play environment information; extracting an object corresponding to the called specific object code; creating specific content by combining the extracted objects (S407); converting the specific content into an image (S408); stacking an interaction layer on the image (S409); and providing the image with the interaction layer stacked thereon to the specific medium (S410).

## Description

### CROSS-REFERENCE TO RELATED APPLICATION

This application claims priority to and the benefit of Korean Patent Application No. 2009-97911, filed on October 14, 2009, the disclosure of which is incorporated herein by reference in its entirety.

### BACKGROUND

### 1. Field of the Invention

The present invention relates to a system for providing content and a method of providing content using the content providing system.

### 2. Discussion of Related Art

With the development of the Internet and the proliferation of mobile telecommunication networks, a multimedia age involving Internet web, Internet protocol television (IPTV), mobile telecommunications, digital multimedia broadcasting (DMB), and so on is approaching.

A user accesses contents through a variety of media, such as connecting to wired/wireless Internet using a desktop personal computer (PC) or a laptop, accessing wireless multimedia service (DMB or mobile multimedia service) using a personal digital assistant (PDA) or a mobile phone, and viewing Internet broadcast (IPTV) using a television (TV).

However, even with are a variety of media, contents available to a user are limited. The user may have limited access to content or may be unable to conveniently obtain desired content through his or her frequently used medium.

Accordingly, there is a need for a scheme of automatically converting content for one medium into content for other media.

### SUMMARY OF THE INVENTION

The present invention is directed to a method and system for providing content that are suitable for a connected medium and capable of activating a specific function by creating specific content corresponding to the connected medium by combining a plurality of objects, converting the created specific content into an image, stacking an interaction layer on the image, and providing the image to the connected specific medium.

According to an aspect of the present invention, there is provided a method of providing content through a content providing system that is accessible through a plurality of media, the method including: dividing content into objects and associating the divided objects with corresponding codes; storing the objects associated with the codes in a database; accepting a connection of a specific medium among the plurality of media; receiving a request for specific content from the connected specific medium; extracting play environment information including terminal feature information for the connected specific medium; calling a specific object code corresponding to the connected specific medium from a database in consideration of the extracted play environment information; extracting an object corresponding to the called specific object code; creating specific content by combining the extracted objects; converting the specific content into an image; stacking an interaction layer on the image; and providing the image with the interaction layer stacked thereon to the specific medium.

According to another aspect of the present invention, there is provided a system for providing content that is accessible through a plurality of media, the system including: a divider for dividing content into objects and associating the divided objects with corresponding codes; a database for storing the objects associated with the codes; a receiver for receiving a connection signal from a specific medium of the plurality of media and receiving a request for specific content from the connected specific medium; a calling unit for extracting play environment information including terminal feature information for the connected specific medium and calling a specific object code corresponding to the connected specific medium from the database in consideration of the extracted play environment information; a creation unit for extracting objects corresponding to the called specific object code, combining the extracted objects to create specific content, converting the created specific content into an image, and stacking an interaction layer on the image; a transmitter for providing a file of the image with the interaction layer stacked thereon to the specific medium; and a controller for accepting a connection to the content providing system through the specific medium, and controlling the divider, the database, the calling unit, the creation unit, and the transmitter.

Further advantageous embodiments are laid down in the claims.

For example, in one preferred embodiment a function interworking with a specific menu is set in a predetermined area of the interaction layer.

In another preferred embodiment the interaction layer is implemented transparently.

In yet another preferred embodiment the specific menu comprises a function for a link to a specific screen based on link information related to a specific object among the extracted objects.

Preferably, the link information may comprise information for a link to a space where goods of a specific brand related to the specific object can be purchased.

### BRIEF DESCRIPTION OF THE DRAWINGS

The above and other objects, features and advantages of the present invention will become more apparent to those of ordinary skill in the art by describing in detail exemplary embodiments thereof with reference to the accompanying drawings, in which:
FIG. 1 is a block diagram for explaining a method of providing content according to an exemplary embodiment of the present invention;
FIG. 2 is a block diagram of a content providing system 300 according to an exemplary embodiment of the present invention;
FIG. 3 illustrates an example in which content is created for each medium through a content providing system according to an exemplary embodiment of the present invention;
FIG. 4 is a flow chart illustrating an example in which content is provided through the content providing system;
FIG. 5 illustrates a method of creating specific content by stacking object layers; and
FIG. 6 illustrates an example in which an interaction layer is stacked on an image converted from specific content.

### DETAILED DESCRIPTION OF EXEMPLARY EMBODIMENTS

Exemplary embodiments of the present invention will be described in detail below with reference to the accompanying drawings. While the present invention is shown and described in connection with exemplary embodiments thereof, it will be apparent to those skilled in the art that various modifications can be made without departing from the spirit and scope of the invention.

Hereinafter, a method of providing content through a content providing system will be described with reference to the accompanying drawings.

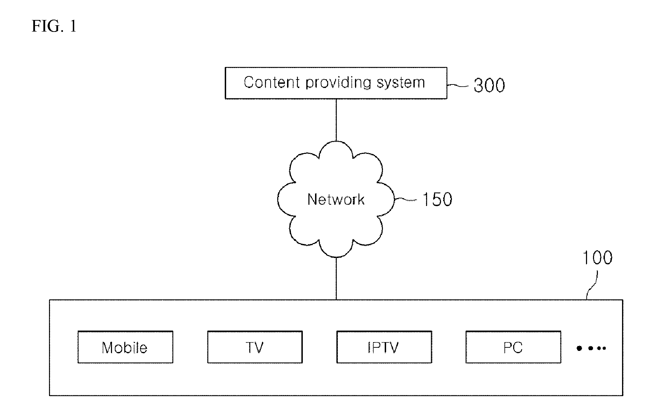

FIG. 1 is a block diagram for explaining a method of providing content according to an exemplary embodiment of the present invention.

A content providing system 300 according to an exemplary embodiment of the present invention may be accessed through a specific medium 100 over a network 150. The network 150 refers to a network that performs communication through a medium, such as the Internet, a wireless communication network, a broadcasting network, or the like.

The specific medium 100 may include a variety of terminals connected to the content providing system 300. For example, the specific medium 100 may include a mobile terminal, a television (TV), an Internet protocol television (IPTV), a desktop PC, and so on.

The content providing system 300 may be accessed through a plurality of media. Accordingly, the content providing system 300 may provide content via multimedia. Providing the content may include displaying the content, transmitting the content, and so on.

The plurality of media may include a TV, an IPTV, mobile telecommunication, Internet web, DMB, and so on.

The TV refers to a medium for receiving a broadcast signal from a broadcasting system, demodulating the received broadcast signal, and displaying image and voice information. The TV may include an analog TV using an analog signal and a digital TV using a digital signal.

The IPTV is a service of providing broadcasting channels, video on demand (VOD), bidirectional data service and the like on a single terminal using high-speed Internet. The IPTV service is provided through collection of contents from a contents provider (CP), a program provider (PP), and the like and processing of the contents, determination of a content format for compression for smooth transmission to an IPTV network, right protection for a copyright holder, and content protection for preventing illegal distribution. In an exemplary embodiment of the present invention, the IPTV is not a simple Internet TV, but a medium for transmitting dedicated content designed to be controlled by a simple remote control rather than a keyboard.

The mobile telecommunication is a concept including second-generation mobile telecommunication such as global system for mobile telecommunication (GSM) and code division multiple access (CDMA), third-generation mobile telecommunication such as global system for mobile telecommunication (WCDMA), CDMA2000, high speed downlink packet access (HSDPA), and high speed uplink packet access (HSUPA), and next-generation mobile telecommunication such as Wibro and long term evolution (LTE). The mobile telecommunication is a medium for transmitting dedicated content designed to be suitable for a relatively small screen of a mobile phone.

The Internet web is a medium for transmitting documents created in markup language, such as hyper text markup language (html), extended markup language (xml), and standard generalized markup language (sgml), using hypertext transfer protocol (http) or transmission control protocol-internet protocol (TCP/IP).

The digital multimedia broadcasting (DMB) is a concept including territorial DMB and satellite DMB. The digital multimedia broadcasting (DMB) is a medium for transmitting dedicated content designed to be suitable for a relatively small screen of a portable DMB terminal.

Throughout this disclosure, content corresponding to a medium refers to content optimized to be readily played through the medium. Specifically, content corresponding to the Internet web is created using markup language such as html and xml, or script language such as java script, or an add-in program such as active x and ocx, and transmitted through TCP/IP. Content corresponding to the mobile telecommunication is a simplified version of the Internet web content for a mobile telecommunication terminal and is transmitted via a wireless application protocol (WAP). Content corresponding to the IPTV refers to a multimedia file encoded by MPEG-2, MPEG-4, WMV-9, H.264, or the like. Content corresponding to the DMB is a multimedia file encoded by MPEG-2 or MPEG-4 and has a relatively smaller size than the content corresponding to the IPTV.

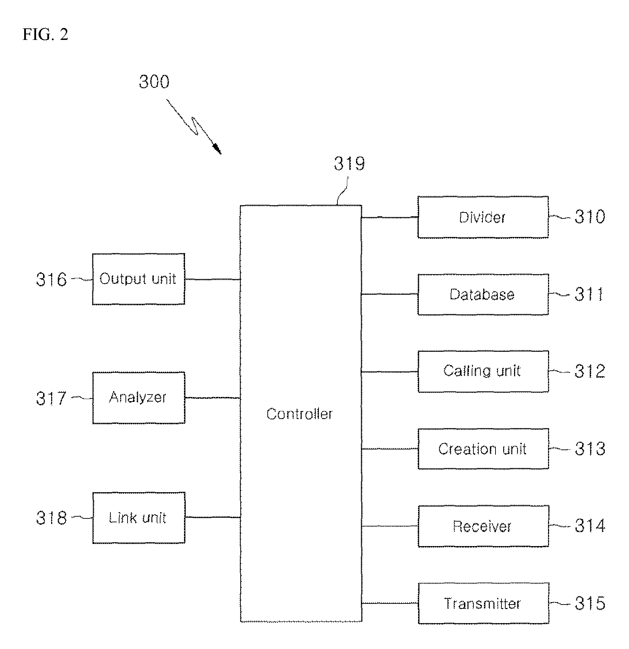

FIG. 2 is a block diagram of a content providing system 300 according to an exemplary embodiment of the present invention. The content providing system 300 may include a divider 310, a database 311, a calling unit 312, a creation unit 313, a receiver 314, a transmitter 315, an output unit 316, an analyzer 317, a link unit 318, and a controller 319. In the content providing system 300, some of the components may be unnecessary in exemplary embodiments and other components may be added in other exemplary embodiments.

The divider 310 may divide content into objects. In the disclosure, the objects refer to elements of the content. For example, when the content is an article consisting of an image and a text, the image and the text may be one object. When the image is divided into a first image area and a second image area, the first image area and the second image area may be objects, respectively.

The divider 310 may associate the divided objects with specific codes. In particular, the divider 310 may associate an attribute of each object with a specific code. For example, object A may be associated with code A and object B may be associated with code B. In the disclosure, the attribute of the object refers to an essential feature for identifying the object from other objects. A load of the content providing system 300 can be minimized by extracting the attribute of the object and associating only the attribute with the specific code, instead of associating all features of the object with specific codes.

For example, it is assumed that content 1 consists of object A, object B, and object C, and content 2 consists of object A, object B, and object D. Where the content is stored in the database 311 in units of content, content 1 (object A+object B+object C) and content 2 (object A+object B+object D) are stored in the database 311, such that object A and object B are stored in an overlapping manner. However, where content is divided into objects and the divided objects and specific codes associated with the divided objects are stored in the database 311, only object A, object B, object C, object D, and code information associated with the objects are stored in the database 311. Thus, where content is created and stored using the division of the content into objects, an amount of information or data stored in the database 311 can be reduced.

The division of content into objects can reduce a loading time to provide the content.

Meanwhile, where the objects are associated with the specific codes as described above, tracking information for each object may be calculated by checking tracking of each code. The tracking information for the object refers to information related to a trace of the object. The tracking information may include an extraction number of the object, information on a movement path of the extracted object, conversion information for the extracted object, and so on.

According to an exemplary embodiment of the present invention, the content providing system 300 may check the tracking of each code by numbering each code to correspond to a code extraction number. First extracted object A may be associated with code "A_0001" and second extracted object A may be associated with code "A_0002." Accordingly, the extraction number of each object may be checked from numerals (e.g., 0001 and 0002) subsequent to a code (e.g., "A" for object A) associated with an object attribute.

The database 311 is a space in which various items of information are stored. For example, specific content may be stored in the database 311. The specific content may include articles about a specific brand, moving pictures, images, details about products, an article about products, images of products, and moving pictures of products, and so on. In particular, objects constituting specific content may be stored in association with specific codes. A detailed description thereof will be described below.

The calling unit 312 may extract play environment information for the connected specific medium 100. The play environment information may be extracted from the database 311 or received from the connected specific medium 100. The play environment information may include terminal feature information for the connected specific medium 100, user play-preference feature information, and so on. The terminal feature information may include decoding performance information, display information and so on for the connected medium. The user play-preference feature information is information on user-specific play preferences and preference ratings, which results from user preference or terminal performance. Where content is a moving picture or a still picture photographed by a virtual camera and displayed, the user play-preference feature information may include information on a focal distance of the virtual camera, information related to a camera location in a three-dimensional virtual scene, information related to a location directed by the virtual camera in the three-dimensional virtual scene, and so on. Further, the calling unit 312 may call a specific object code corresponding to the connected specific medium from the database 311 in consideration of the extracted play environment information.

The creation unit 313 may extract objects corresponding to the specific object code called by the calling unit 312 and combine the extracted objects to create specific content. Further, the creation unit 313 may serve to convert the created specific content into an image. The creation unit 313 may stack an interaction layer on the image. In the disclosure, the interaction layer refers to an interface set to perform a specific function. For example, the interaction layer refers to a layer having a specific function set for bidirectional communication. The bidirectional communication may mean communication between the specific medium 100 and the content providing system 300. A method of creating content by combining objects will be described in detail below.

The receiver 314 may receive a variety of signals, contents, and so on. For example, the receiver 314 may receive a connection signal from a specific medium or content from a content provider. The received connection signal may be delivered to and analyzed by the controller 319. The controller 319 may analyze the connection signal to confirm the type, the location information, and the user information of the connected medium. The controller 319 may determine whether to accept a connection of the specific medium based on the analyzed information. If the connection is accepted, the content providing system 300 may perform data communication with the connected medium 100.

Meanwhile, the receiver 314 may include a reception path (not shown) corresponding to the connected medium. For example, a connection signal via a mobile device may be received through a first reception path, a connection signal via an Internet web may be received through a second reception path, and a connection signal via a TV may be received through a third reception path. The receiver 314 may also receive specific data through the reception path corresponding to the connected medium from the connected medium.

The transmitter 315 transmits content (including the image with the interaction layer stacked thereon) stored in the database 311 or link information for confirmation of the content stored in the database 311 to an external space. The external space refers to a space other than the content providing system 300. For example, the external space may include a user terminal, an advertiser terminal, a specific web site (or a specific web server), and so on. The external space may include an external user space. The external user space refers to a space associated with a user, which is provided by a system external to the content providing system 300. For example, the external user space may include a mini homepage, a blog, an E-mail and so on of a specific user.

Meanwhile, the transmitter 315 may transmit specific data (e.g., the content, the image with the interaction layer stacked thereon, or the link information) in consideration of the medium connected to the content providing system 300 under control of the controller 319. For example, the transmitter 315 may transmit mobile content to the mobile terminal and TV content to the TV.

Meanwhile, the transmitter 315 may include a transmission path (not shown) corresponding to the connected medium. For example, data transferred by a mobile device may be transmitted through a first transmission path, data transferred by an Internet web may be transmitted through a second transmission path, and data transferred by a TV may be transmitted through a third transmission path.

The output unit 316 outputs a screen for various items of information. For example, the output unit 316 displays a screen for a search result matching an input keyword, a screen for content search, a screen for play of specific content, and so on.

The analyzer 317 analyzes a user activity history to produce user activity pattern information. For example, the analyzer 317 may analyze the user activity history by analyzing activity pattern information fed back from an Internet uniform resource locator (URL), an IPTV operating system, and a mobile telecommunication system or analyzing, for example, a use number of content or a specific object constituting the content stored in the content providing system 300a. The analyzer 317 may produce reaction information for content or a specific object by analyzing reaction to the content. Examples of the reaction information may include a scrapping number and a comment number for specific content or a specific object provided by the content providing system 300, an edit number of the specific content, and so on.

The link unit 318 may provide a link to a specific space based on specific link information. The link information refers to information for a link to the specific space, such as URL information. The specific space linked by the link information may be inside or outside the content providing system 300.

The controller 319 may organically control all functions of the divider 310, the database 311, the calling unit 312, the creation unit 313, the receiver 314, the transmitter 315, the output unit 316, the analyzer 317, and the link unit 318.

Hereinafter, a method of creating specific content through division of content into objects will be described in greater detail.

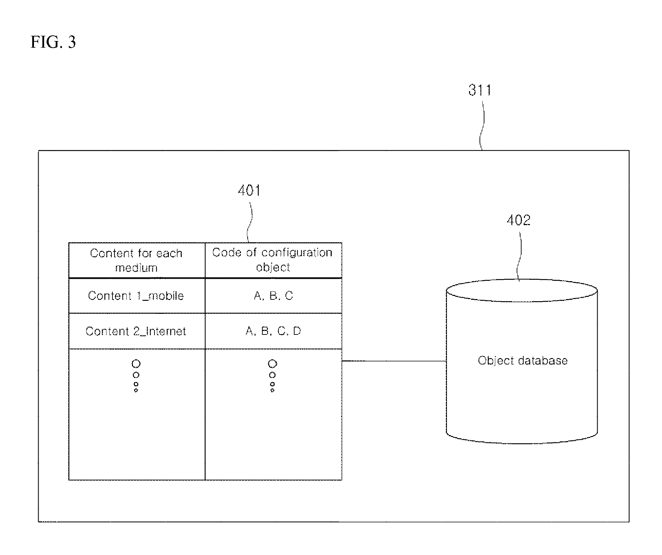

FIG. 3 illustrates an example in which content is created for each medium through the content providing system 300 according to an exemplary embodiment of the present invention.

As shown in FIG. 3, where content is divided into objects, the divided objects may be combined according to the nature of a medium to create specific content. The created specific content may be provided to a user or converted into an image. The database 311 may include a mapping table 401 for objects constituting the content and an object database 402 in which the divided objects are stored. For example, the calling unit 312 may call object configuration codes A, B, and C to provide mobile content 1. Here, the object configuration code refers to specific code associated with the divided specific object. When the object configuration codes A, B, and C are called, the creation unit 313 may extract objects associated with the called codes from the object database 402 and combine the objects to create specific content. Further, the calling unit 312 may call object configuration codes A, B, C, and D to provide Internet content 1. When the object configuration codes A, B, C, and D are called, the creation unit 313 may extract objects associated with the called codes from the object database 402 and combine the objects to create specific content. A difference in configuration objects between mobile content 1 and Internet content 1 is due to a medium-specific environment. For example, since media have different decoding capabilities, play capabilities, or display sizes, object configuration codes constituting the content may differ. The plurality of contents created as described above may be provided through respective media.

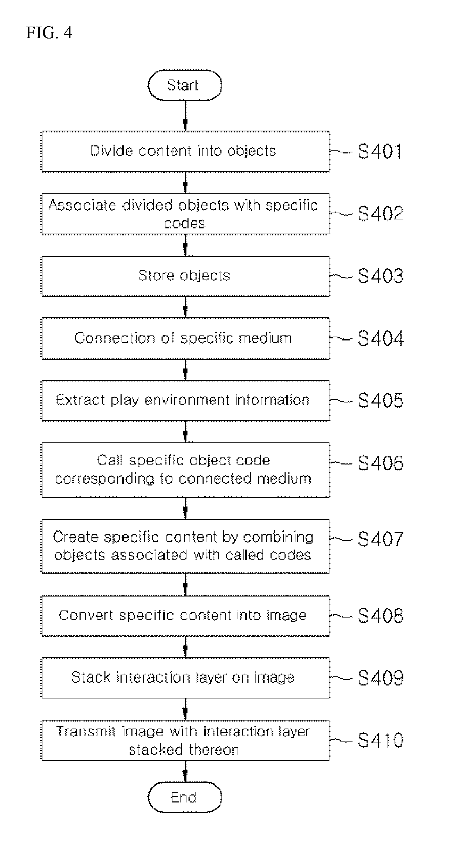

FIG. 4 is a flow chart illustrating an example in which content is provided through the content providing system 300.

The divider 310 may divide content into objects (S401). For example, when the content is an article consisting of an image and text, the divider 310 may regard the image and the text as one object and divide the content into the image and the text, and when the content consists of a plurality of images, the divider 310 may regard the respective images as objects and divide the content into the images.

The divider 310 may associate the divided objects with specific codes (S402). In particular, the divider 310 may associate an attribute of each object with a specific code.

The object associated with the specific code may be stored in the database 311 (S403). Since storing the object associated with the specific code has been described in FIG. 3, it will not be described herein.

The receiver 314 may receive a connection signal from a specific medium (S404). When the receiver 314 receives the user connection signal, the controller 319 may determine whether to accept the connection. For example, the controller 319 may analyze the connection signal to confirm the type, the location information, or the user information of the connected medium. The controller 319 may determine whether to accept a connection of the specific medium based on the analysis result. If the user connection is normally made, the controller 319 may accept the user connection made through the specific medium.

The receiver 314 may also receive a request for specific content from the connected medium 100. The request for specific content may refer to a request for content optimized for the connected medium 100. Accordingly, when the connected medium is a mobile device, the request for specific content may be a request for content optimized for a mobile environment (e.g., a specific moving picture optimized for the mobile environment). Upon receipt of the request for specific content, the calling unit 312 may extract play environment information for the connected specific medium (S405). The play environment information may include terminal feature information for the connected specific medium 100, user play-preference feature information, and so on. When the play environment information is previously stored in the database 311, the calling unit 312 may extract the play environment information from the database 311. Alternatively, the calling unit 312 may extract the play environment information through the connected medium 100.

When the play environment information for the connected medium is extracted, the calling unit 312 may call a specific object code from the database 311 in consideration of the extracted play environment information (S406).

The creation unit 313 may create specific content by combining objects associated with the called codes (S407). There are several methods of creating specific content through combination of objects. For example, there is a method of creating specific content by stacking object layers.

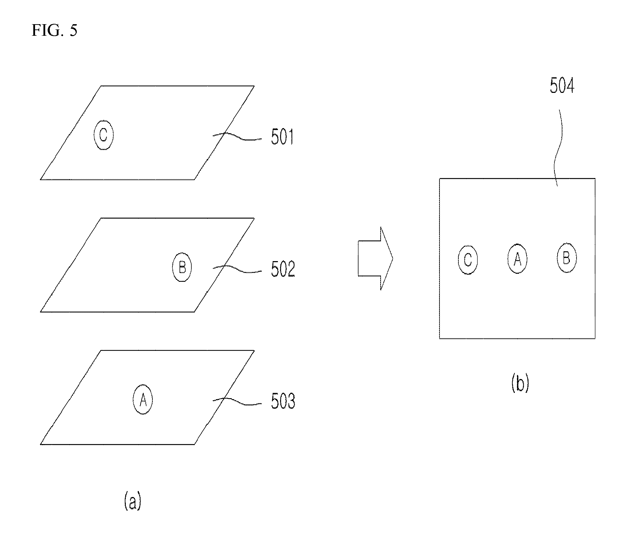

FIG. 5 illustrates a method of creating specific content by stacking object layers.

In FIG. 5a, a process of stacking a first object layer 503 including object "A", a second object layer 502 including object "B", and a third object layer 501 including object "C" is illustrated. Although one object is included in each of the object layers 501, 502 and 503, a plurality of objects may be included in each object layer.

FIG. 5b illustrates one specific content 504 formed by stacking the object layers 501, 502 and 503 shown in FIG. 5A. The specific content 504 may consist of layers. That is, the specific content 504 may be created by stacking a plurality of object layers. A process of combining objects by stacking the object layers can be more conveniently performed.

The creation unit 313 may convert the specific content created by stacking the object layers into an image (S408). The image conversion can reduce a size of the specific content.

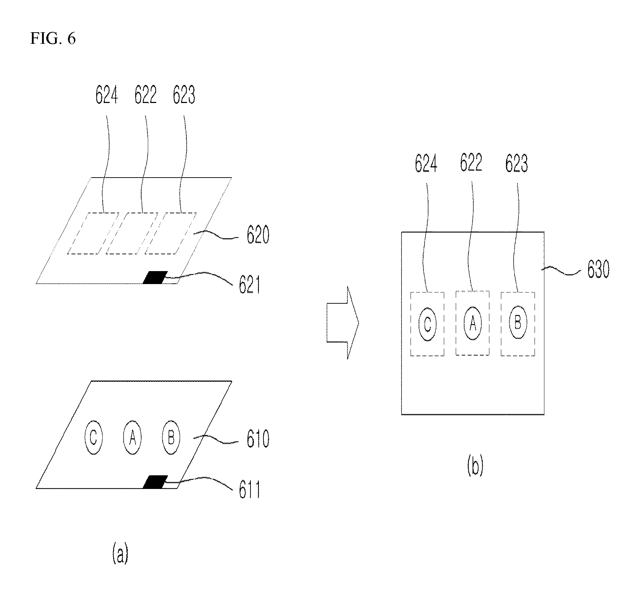

The creation unit 313 may stack an interaction layer on the image converted from the specific content (S409). A method of stacking an interaction layer on an image will be described with reference to FIG. 6.

FIG. 6 illustrates an example in which an interaction layer is stacked on an image converted from the specific content.

In FIG. 6a, a layer 610 indicates an image converted from specific content created by combining a plurality of objects. That is, the layer 610 indicates the image compressed from the specific content. A layer 620 indicates an interaction layer. Functions interworking with specific menus may be set in predetermined areas 622, 623 and 624 of the layer 620. The layer 620 may be implemented transparently for display of the specific content. When the layer 620 is implemented transparently, the object included in the layer 610 can be confirmed clearly.

The specific menu may include a function for a link to a specific screen based on link information related to a specific object among objects constituting the specific content. The link information may include information for a link to a space from which content first created using the specific object can be confirmed, information for a link to a space where goods of a specific brand related to a specific object can be purchased, information for a link to a space from which an object associated with the specific object can be confirmed, and so on.

Further, at least one of settings, locations and sizes of the predetermined areas 622, 623, and 624 of the layer 620 may be fixed irrespective of a state of the layer 610, but may also vary with the state of the layer 610. For example, object arrangement information 611 indicating arrangement information for an object may be inserted into the layer 610. The object arrangement information 611 may be implemented as a bar code. A unit 621 capable of reading the object arrangement information 611 may be included in an area of the layer 620. In this case, at least one of the settings, the locations and the sizes of the predetermined areas 622, 623, and 624 of the layer 620 can vary with an object arrangement state read by the unit 621. In FIG. 6b, a layer 630 is obtained by stacking the layer 610 and the layer 620.

Meanwhile, according to an exemplary embodiment of the present invention, although not shown, when specific content consists of a plurality of object layers, an interaction layer forming a pair with each object layer may be stacked. In this case, each object layer may be converted into an image.

The layer 630 which has the image and the interaction layer stacked thereon may be transmitted to the specific medium 100 by the transmitter 315 (S410). A user of the specific medium 100 may then confirm optimal specific content from the received layer 630 and activate a specific menu function. That is, the user may confirm requested specific content from the image of the layer 630, and activate a function by selecting the predetermined area of the interaction layer in which the function is set. For example, where a function for a link to a space where the user can purchase goods related to a specific object is set in the interaction layer (specific link information is inserted), the user may confirm the space where the use can purchase the goods related to the specific object, by selecting the predetermined area of the interaction layer.

According to an exemplary embodiment of the present invention, the above-described method can be implemented as computer readable codes in a computer-readable record medium. The computer-readable record medium includes all types of record media in which computer-readable data are stored. Examples of the computer-readable record medium include a ROM, a RAM, a CD-ROM, a magnetic tape, a floppy disk, and an optical data storage. Further, the record medium may be implemented in the form of a carrier wave (e.g., Internet transmission).

In a method and system for providing content according to an exemplary embodiment of the present invention, single content can be rapidly and conveniently converted into content corresponding to a variety of media and provided.

According to an exemplary embodiment of the present invention, since specific content corresponding to a connected medium can be created by combining a plurality of objects and converted into an image for provision, a size of transferred specific content can be reduced.

Furthermore, according to an exemplary embodiment of the present invention, since the interaction layer is stacked on the image converted from the specific content and the image is provided to the connected specific medium, the content providing system can bidirectionally communicate with a user of the content.

The content providing system and method as described above are not limited to the exemplary embodiments and some or all of the exemplary embodiments may be selectively combined for various variations of the present invention.

## Claims

1. A method of providing content through a content providing system that is accessible through a plurality of media, the method comprising:
dividing content into objects and associating the divided objects with corresponding codes (S401, S402));
storing the objects associated with the codes in a database (S403);
accepting a connection of a specific medium (100) among the plurality of media (S404);
receiving a request for specific content from the connected specific medium (S404);
extracting play environment information including terminal feature information for the connected specific medium (S405);
calling specific object codes corresponding to the connected specific medium from the database in consideration of the extracted play environment information (S406);
extracting objects corresponding to the called specific object codes;
creating specific content by combining the extracted objects (S407);
converting the specific content into an image (S408);
stacking an interaction layer on the image (S409); and
providing the image with the interaction layer stacked thereon to the specific medium (S410).

2. The method of claim 1, wherein the creating the specific content comprises:
stacking a plurality of layers, each including at least one object, or
stacking layers in units of objects.

3. The method of claim 1 or 2, wherein the image produced through the conversion does not exceed a maximum width of a display dimension for the connected specific medium.

4. The method of one of claims 1 to 3, wherein the play environment information further comprises user play-preference feature information.

5. The method of one of claims 1 to 4, wherein a function interworking with a specific menu is set in a predetermined area of the interaction layer.

6. The method of claim 5, wherein the interaction layer is implemented transparently.

7. The method of one of claims 1 to 6, wherein the specific menu comprises a function for a link to a specific screen based on link information related to a specific object among the extracted objects.

8. The method of claim 7, wherein the link information comprises information for a link to a space where goods of a specific brand related to a specific object can be purchased.

9. A system for providing content that is accessible through a plurality of media, the system comprising:
a divider (310) for dividing content into objects and associating the divided objects with corresponding codes;
a database (311) for storing the objects associated with the codes;
a receiver (314) for receiving a connection signal from a specific medium of the plurality of media and receiving a request for specific content from the connected specific medium;
a calling unit (312) for extracting play environment information including terminal feature information for the connected specific medium and calling specific object codes corresponding to the connected specific medium from the database in consideration of the extracted play environment information;
a creation unit (313) for extracting objects corresponding to the called specific object codes, combining the extracted objects to create specific content, converting the created specific content into an image, and stacking an interaction layer on the image;
a transmitter (315) for providing a file of the image with the interaction layer stacked thereon to the specific medium; and
a controller (319) for accepting a connection of the specific medium to the content providing system, and controlling the divider, the database, the calling unit, the creation unit, and the transmitter.

10. The system of claim 9, wherein the creation unit (313):
stacks a plurality of layers, each including at least one object, to create the specific content, and/or
creates the specific content by stacking layers in units of object.

11. The system of claim 9 or 11, wherein the controller (319) performs a control so that the created image does not exceed a maximum width of a display dimension for the connected specific medium.

12. The system of one of claims 9 to 11, wherein the play environment information further comprises user play-preference feature information.

13. The system of one of claims 9 to 12, wherein a function interworking with a specific menu is set in a predetermined area of the interaction layer.

14. The system of claim 13, wherein the interaction layer is implemented transparently.

15. The system of claim 13 or 14, wherein the specific menu comprises a function for a link to a specific screen based on link information related to a specific object among the extracted objects, and wherein, preferably, the link information comprises information for a link to a space where goods of a specific brand related to the specific object can be purchased.
